# EUROPÄISCHE PATENTANMELDUNG

(11) **EP 1 988 581 A1**
(43) Veröffentlichungstag der Anmeldung: **05.11.2008**
(21) Anmeldenummer: 08007734.0
(22) Anmeldetag: 22.04.2008
(51) Int. Cl.: H01L 31/048, H05K 5/02

(54) **Verbindungsbox für Solar-Panels**

(30) Priorität: 26.04.2007 DE 202007006007 U
(71) Anmelder: FPE Fischer GmbH, 88299 Leutkirch (DE)
(72) Erfinder: Fischer, Ulrich, 88299 Leutkirch-Gebrazhofen (DE); Pfeffer, Roland, 88299 Leutkirch (DE)
(74) Vertreter: Kaufmann, Sigfrid

(57) **Zusammenfassung**

Die Erfindung betrifft eine Verbindungsbox für Solar-Panels, innerhalb derer das Kondensieren von Feuchtigkeit vermieden und infolgedessen Langzeit-Kontaktkorrosion verhindert wird. Die Verbindungsbox bestehend aus einem Gehäuse (1), vorzugsweise aus Metall, in welchem sich ein Terminalblock und Schutzdioden oder entsprechende Leistungshalbleiter befinden, zeichnet sich dadurch aus, dass in mindestens eine Gehäusewand mindestens eine Öffnung (4) eingebracht ist, die mit einer Membran (5) aus einem Vliesverbundstoff wasserdicht, aber luftdurchlässig verschlossen ist. Für eine schnelle Abgabe des Wasserdampfes ist es von Vorteil, wenn mindestens zwei mit einer Membran verschlossene Öffnungen in das Gehäuse eingebracht sind. Um hierbei einen guten Gasaustausch durch Konvektion zu bewirken, werden vorteilhafterweise mindestens zwei mit einer Membran verschlossene Öffnungen in sich jeweils gegenüberliegende Gehäusewände eingebracht.

## Beschreibung

Die Erfindung betrifft eine Verbindungsbox für Solar-Panels, innerhalb derer das Kondensieren von Feuchtigkeit vermieden und infolgedessen Langzeit-Kontaktkorrosion verhindert wird.

Bei Solaranlagen, die mehrere Solar-Panels umfassen, befindet sich üblicherweise an jedem der Solar-Panels eine Verbindungsbox, in der sich einerseits die Anschlussklemmen für die elektrischen Zuleitungen und andererseits die Schutzdioden befinden, die dem Schutz der Solarzellen vor Reversspannungen dienen. Mitunter sind dort auch elektronische Schaltungen zur Überwachung und Kontrolle der Solar-Panels untergebracht.

Aus dem Stand der Technik sind verschiedenartige Verbindungsboxen bekannt. Die Bandbreite reicht von einfachen Boxen aus Kunststoff bis hin zu Boxen aus Metall, die ein verbessertes Wärmemanagement gewährleisten (DE 10 2006 027 104.1). Alle bisher bekannten Boxen haben jedoch den Nachteil, dass in diesen ein Auskondensieren von Feuchtigkeit und die damit verbundenen Korrosionserscheinungen nicht vollständig vermieden werden können.

Während des Betriebs der Solaranlage wird in den Schutzdioden und ggf. auch durch die Schaltungen Wärme erzeugt. Dies führt zu einer Erwärmung der Luft innerhalb der Box. Da warme Luft mehr Feuchtigkeit aufnehmen kann als kalte, entsteht ein Konzentrationsgradient, der, für den meist üblichen Fall, dass die Box nicht völlig gasdicht ist, eine Diffusion von Wasserdampf von dem die Box umgebenden Außenraum in die Box verursacht.

Kühlt nun die Box, beispielsweise in der Ruhephase während der Nacht, ab, so kann die in der Box angesammelte Feuchtigkeit bei den derzeit bekannten Boxen nicht schnell genug aus dieser entweichen. Dies begründet sich darin, dass in dem Moment, in dem der Wasserdampf in der Box zu kondensierend beginnt, das kondensierte Wasser nicht mehr zum Wasserdampfpartialdruck beiträgt und damit quasi die "treibende Kraft" verringert wird. Durch eine langsamere Gaskinetik bei niedrigeren Temperaturen wird dieser Effekt noch verstärkt.

Bei der Montage einer Verbindungsbox wird ein atmosphärischer Zustand mit einer bestimmten Luftfeuchtigkeit eingeschlossen. Bei einem völlig dichten Gehäuse erfolgt also im Falle seiner Abkühlung, namentlich bei Nacht oder im Winter, eine Kondensation der im Gehäuse "eingeschlossenen" Luftfeuchtigkeit.

Das in den Boxen entstehende Kondenswasser verursacht regelmäßig eine Korrosion der in der Box befindlichen Metallteile. Besonders kritisch ist die Korrosion von elektrischen Kontakten, da durch diese Leistungsverluste aufgrund von erhöhten Kontaktwiderständen und langfristig auch Totalausfälle durch Unterbrechungen verursacht werden.

Der Erfindung liegt die Aufgabe zugrunde, die Nachteile des Standes der Technik zu beseitigen; insbesondere ist eine Verbindungsbox zu schaffen, bei der eine gute Belüftung des Innenraums gewährleistet ist und Feuchtigkeit schnell aus diesem entweichen kann. Andererseits darf bei normalen atmosphärischen Bedingungen kein Wasser von außen in die Box eindringen.

Diese Aufgabe wird erfindungsgemäß durch die kennzeichnenden Merkmale des Anspruches 1 gelöst; vorteilhafte Ausführungen der Erfindung ergeben sich aus den Ansprüchen 2 bis 6.

Ausgegangen wird von einer Verbindungsbox für Solar-Panels, die aus einem Gehäuse, in welchem sich ein Terminalblock und Schutzdioden bzw. entsprechende Leistungshalbleiter befinden, besteht. Nach Maßgabe der Erfindung ist in mindestens eine Gehäusewand mindestens eine Öffnung eingebracht, die mit einer Membran aus einem Vliesverbundstoff wasserdicht, aber luftdurchlässig verschlossen ist.

Für eine schnelle Abgabe des Wasserdampfes ist es von Vorteil, wenn mindestens zwei mit einer Membran verschlossene Öffnungen in das Gehäuse eingebracht werden. Um hierbei einen guten Gasaustausch durch Konvektion zu bewirken, werden vorteilhafterweise mindestens zwei mit einer Membran verschlossene Öffnungen in sich jeweils gegenüberliegende Gehäusewände eingebracht. Für das Einbringen der Öffnungen bietet sich der Gehäusedeckel und der Gehäuseboden der Verbindungsbox an, da es dort meistens, im Gegensatz zu den Seitenwänden, größere, unstrukturierte Flächenbereiche gibt. In den Gehäuseboden eingebrachte Belüftungsöffnungen sind jedoch nur dann sinnvoll, wenn die Verbindungsbox am zugehörigen Solar-Panel so angebracht ist, dass ein für die Belüftung ausreichender Abstand zum Gehäuseboden gewährleistet ist.

Da die Verbindungsbox aufgrund ihrer Lage im Außenbereich und der zusätzlichen Erwärmung, durch die in ihr befindlichen Schutzdioden und ggf. elektronischen Schaltungen während des Tages, sehr starken Temperaturschwankungen unterliegt, ist es vorteilhaft, Membranen mit einem Gebrauchstemperaturbereich von ca. - 40 °C bis 125 °C zu verwenden.

Zur Vermeidung von Verschmutzungen im Inneren der Verbindungsbox ist es außerdem zweckmäßig, Membranen zu verwenden, die eine hohe Rückhalterate für Staub aufweisen und die auch dicht gegenüber lipophilen Flüssigkeiten sind.

Die Erfindung wird im Folgenden anhand von zwei Ausführungsbeispielen näher erläutert. Hierzu zeigen:
- Fig. 1: eine Seitenansicht einer Verbindungsbox mit zwei Belüftungsöffnungen im Schnitt
- Fig. 2: eine Seitenansicht einer Verbindungsbox mit einer Belüftungsöffnung im Schnitt

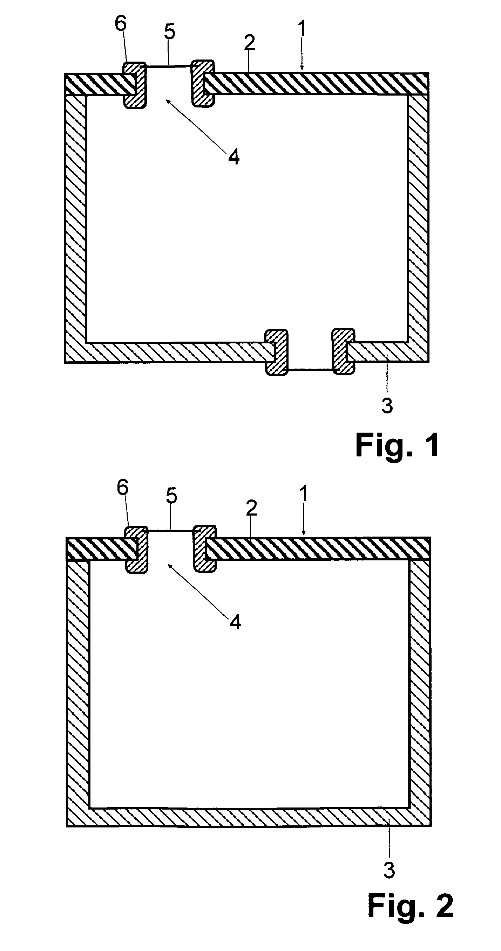

Wie in Fig. 1 dargestellt befinden sich bei der Verbindungsbox mit zwei Belüftungsöffnungen jeweils in dem Gehäusedeckel 2 und dem Gehäuseboden 3 der Verbindungsbox 1 runde Belüftungsöffnungen 4. In diese sind die aus flexiblem und witterungsbeständigem Silikongummi bestehenden Halterungsringe 6 eingebracht, in welche die wasserdichten, aber luftdurchlässigen Membranen 5 eingeschweißt sind. Die Ringe 6 sind mit leichtem Druck eingesetzt, d. h., der Silikongummi liegt an den Kontaktstellen zum Gehäusedeckel 2 bzw. Gehäuseboden 3 immer mit leichtem Druck an. Dadurch wird eine gasdichte Verbindung in einfacher Weise gewährleistet; außerdem können der Ring 6 und die Membran 5 ohne großen Aufwand ausgetauscht werden, wenn sich z. B. die Membran 5 durch Staub oder andere Partikel zugesetzt hat.

Durch die versetzte Anordnung der beiden Membranen 5 im Deckel 2 und Boden 3 der Verbindungsbox ist eine optimale Belüftung und damit eine sichere Abführung von Feuchtigkeit aus dem Gehäuse gewährleistet.

Die in Fig. 2 dargestellte Verbindungsbox 1 mit einer Belüftungsöffnung wird dann eingesetzt, wenn die Box 1 in einer Solaranlage derart montiert wird, dass der Gehäuseboden 3 entweder vollständig bedeckt ist oder sich kein ausreichender Luftspalt zwischen diesem und einer angrenzenden Systemkomponenten befindet. Dies ist z.B. der Fall, wenn die Box 1, wie meist üblich, direkt auf das zugehörige Solar-Panel geklebt wird. Das Ausführungsbeispiel gemäß Fig. 2 ist für kleine und mittelgroße Verbindungsboxen die bevorzugte Variante.

Bei grundsätzlich gleichem Aufbau befindet sich bei der Box mit einer Belüftungsöffnung lediglich eine Öffnung 4 im Gehäusedeckel 2, jedoch keine im Gehäuseboden 3. Um trotzdem eine sichere Abführung der in der Box 1 befindlichen Feuchtigkeit zu gewährleisten, hat die Membran 5 einen vglw. großen Durchmesser von 4 mm.

### Liste der verwendeten Bezugszeichen

- 1: Verbindungsbox/Gehäuse
- 2: Gehäusedeckel
- 3: Gehäuseboden
- 4: Belüftungsöffnung
- 5: Membran
- 6: Halterungsring

## Patentansprüche

1. Verbindungsbox für Solar-Panels, bestehend aus einem Gehäuse (1), vorzugsweise aus Metall, in welchem sich ein Terminalblock und Schutzdioden oder entsprechende Leistungshalbleiter befinden, **dadurch gekennzeichnet, dass** in mindestens eine Gehäusewand mindestens eine Öffnung (4) eingebracht ist, die mit einer Membran (5) aus einem Vliesverbundstoff wasserdicht, aber luftdurchlässig verschlossen ist.

2. Verbindungsbox nach Anspruch 1, **dadurch gekennzeichnet, dass** mindestens zwei Öffnungen (4) in das Gehäuse (1) eingebracht sind wobei sich mindestens zwei Öffnungen (4) in jeweils gegenüberliegenden Seitenwänden bzw. im Gehäusedeckel (2) und Gehäuseboden (3) befinden.

3. Verbindungsbox nach Anspruch 1, **dadurch gekennzeichnet, dass** sich eine Öffnung (4) im Gehäusedeckel (2) der Verbindungsbox (1) befindet.

4. Verbindungsbox nach Anspruch 2, **dadurch gekennzeichnet, dass** sich jeweils eine Öffnung im Deckel (2) und im Boden (3) der Verbindungsbox befindet.

5. Verbindungsbox nach Anspruch 1 bis 4, **dadurch gekennzeichnet, dass** die mit den Membranen (5) verschlossenen Öffnungen (4) kreisrund sind und einen Durchmesser von ca. 4 mm aufweisen.

6. Verbindungsbox nach Anspruch 1 bis 5, **dadurch gekennzeichnet, dass** die Membranen (5) gasdicht in Halterungsringen (6) eingebracht sind, und diese in die Öffnungen (4) in der Gehäusewand durch Einklemmen gasdicht und lösbar verbunden sind.
